# EUROPEAN PATENT SPECIFICATION

(11) **EP 0 517 701 B1**
(45) Date of publication and mention of the grant of the patent: **01.02.1995**
(21) Application number: 91900742.7
(22) Date of filing: 06.12.1990
(51) Int. Cl.: F24F 7/06

(54) **HEAT RECOVERING VENTILATOR**
WÄRMERÜCKGEWINNENDER VENTILATOR
VENTILATEUR RECUPERATEUR DE CHALEUR

(30) Priority: 06.12.1989 DK 6152/89
(43) Date of publication of application: 16.12.1992
(73) Proprietor: TURBOVENT A/S, DK-9600 Ars (DK)
(72) Inventor: STAEHR, Preben, DK-9066 Ars (DK)
(74) Representative: Skoett-Jensen, Knud
(86) International application number: DK9000318
(87) International publication number: WO9108425

(56) References cited:
- WO-A-85/01570
- CH-A- 657 693
- CH-A- 658 299
- DE-C- 3 017 431
- FR-A- 2 346 578
- SE-B- 444 974
- US-A- 4 513 809

## Description

The present invention relates to a ventilator according to the preamble of claim 1.

It is known to the art to construct such ventilators with heat recovering. Normally, they are made in such a way that an effective heat exchanger of some kind being adaptable to the kinds of flowing media, is used and in that two ventilators are being comprised being arranged suitably with one of them in each of the flows of flowing media suitably able to drive the two flowing media.

In this manner satisfactory functioning embodiments can be constructed, but, on the other hand they are correspondingly space demanding and are correspondingly costly to be provided.

From US-A-4 523 630 a ventilator is known which comprises concentrically arranged heat exchanger sections and a concentric ventilator at the end of the sections which simultaneously sucks an axial flow of air through one section and blows a corresponding flow of air through the other section. By reversing the direction of rotation of the ventilator, the flows are reversed, and the humidity condensed out of the warm air is re-evaporated by the fresh air passing through the heat exchanger. This construction requires a complex control.

From DE-C-3 017 431 another heat exchanging ventilator is known which utilizes a radial type ventilator with a dual rotor separated by a partition, one for injected and one for expelled air, and a heat exchanger arranged in conjunction thereto. However, this construction is very space consuming and does not make use of a counterflow heat exchanger.

It is a purpose according to the present invention to provide a heat recovering ventilator which may be installed in a common through-opening for the two flowing media, as for instance in a through-opening through a wall, and whereby it is possible to use only one single ventilator for a simultaneously driving of the two flowing media. Furthermore, it is wanted, possibly, to achieve a low acoustic noise level from the running ventilator, in which case the first flowing medium for instance may be heated air to be expelled from a living room, from a workshop, from a stable, etc, while the other flowing medium is cold fresh air to be led into these rooms from outside, and which air is wanted heated with the heat from the first of the flowing media that is to be led away from these rooms. Furthermore, it has to be easy to exchange, if necessary, air filters being provided in the heat recovering ventilator, and also it should be easy to carry out any necessary maintenance.

This has resulted according to the invention in the providing of a heat recovering ventilator according to claim 1.

By means of this embodiments may be provided comprising simple guiding means to guide the two flowing media in the vicinity of the driving ventilator, and which driving ventilator thus is one and the same for the two flowing media which thus can be led for instance through one and the same opening in a wall.

Because according to the invention the two rotors are cylinder shaped and are driving the two flowing media in the same direction through the two rotors a more calm operating ventilator is attained, and furthermore, in a rather simple manner it is possible to arrange guiding means which separated from each other are able to guide the two flows of media, being driven by the ventilator, through the rotors which belong to the double rotor that is common to the two flowing media, and which rotors are the means driving the two flows of flowing media. Furthermore, according to the invention an advantageous structure is attained, and this is in particular the case when the heat exchanger is of the kind comprising a number of substantially in parallel with the axis of the cylinder and between cylindric bottom means running tubes which at one of the ends through one or more guiding are supplied with the first flowing medium which medium at the tube exit orifices by means of suitable guiding or possibly without such guiding means from the heat exchanger is led to the rotor of the ventilator serving to drive this first flowing medium away from the heat exchanger, and whereby over a suitable portion of its length the heat exchanger is covered by a cylindric shaped cover which preferably covers the portion of the heat exchanger being most remote from the exit end of it with a cover having a smaller diameter and thus being more close to the heat exchanger, and whereby within a for the purpose suitable vicinity of the ventilator guiding means are positioned serving to lead the second flowing medium arriving from the other rotor of the ventilator into the heat exchanger in between the external sides of the tubes as said run substantially in parallel with the axis of the cylinder, and whereby at the in relation hereto second exit of the heat exchanger, such as at the relatively opposite end of the heat exchanger, guiding means are positioned serving to a conducting away to the user of the flowing medium being provided from the heat exchanger.

In this manner a suitably compact structure has been achieved which it is possible to build into or install in a fairly simple manner within a single through-opening in a wall. A correspondingly good separation of the two flowing media is herethrough attained according to the invention at the room side when being used according to the invention when the heat exchanger tubes are arranged in a circular shaped zone positioned suitably remote from the axis of the heat exchanger, and when at the relative to the ventilator opposite the end of the heat exchanger a mushroom shaped guiding means is present, of which the stem through-going is hollow and serves to pass the second flowing medium.

The employed elements can in a structurally simple manner be put in place and the single elements are easily accessible for instance through a simple mutual pulling-out of the single elements, and whereby only few elements or means are required for the holding together of the joined elements. This is thus achievable according to the invention when the guiding means are composed of a cylindric means that simultaneously carries the drive motor support for the ventilator, and in that the guiding means comprise openings for the said flowing media, and in that the guiding means in the spacing between the cylindric shaped means and the outer cover for the ventilator comprise partitionlike guiding means and spacing providing means.

It has to be added that the heat recovering ventilator has shown itself well suited for this purpose, and these features are described in closer details as follows.

Embodiments according to the invention are described in more details as follows with reference to the drawing in which:
Fig. 1 illustrates a longitudinal section through an embodiment according to the invention of a heat recovering ventilator being installed in a through-opening in a wall 12,
Fig. 2 illustrates in the perspective a heat recovering ventilator ready to be installed in a wall and being an embodiment of the heat recovering ventilator shown in longitudinal cut in Fig. 1,

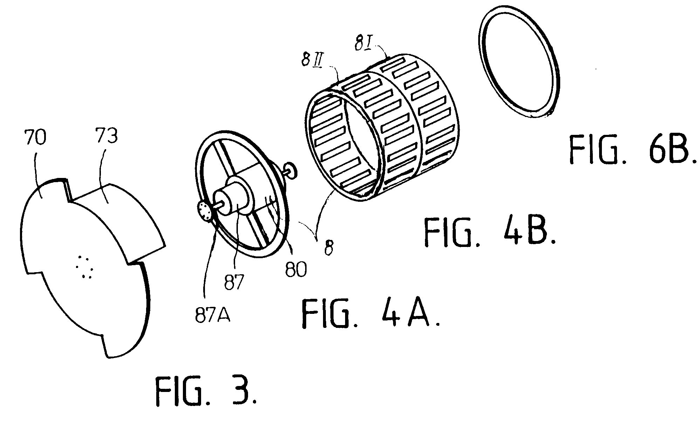

Fig. 3 shows in the perspective a within an angle of 90 degrees rotary damper means serving to enable an external closing of the ventilator,
Fig. 4A illustrates in the perspective drive motor means able to drive the damper means according to Fig. 3 and the ventilator double rotor according to Fig. 4B,
Fig. 4B shows in the perspective a double rotor able to drive flowing media I and II,
Fig. 5 illustrates a cover means which belong to the heat recovering ventilator according to Fig. 2,
Fig. 6A illustrates in the perspective a cylindric shaped means arrangeable as an insertion supporting the drive motor support and guiding means for the flowing media in vicinity of the double rotor,
Fig. 6B shows in the perspective an end wall ring means to be inserted at the double rotor at the cylindric means according to Fig. 6A,
Fig. 7 illustrates partly in the perspective an embodiment of a heat exchanger being part of the heat recovering ventilator according to Fig. 2,
Fig. 8 shows in the perspective and partly in section the heat exchanger according to Fig. 7 viewed in the opposite direction,

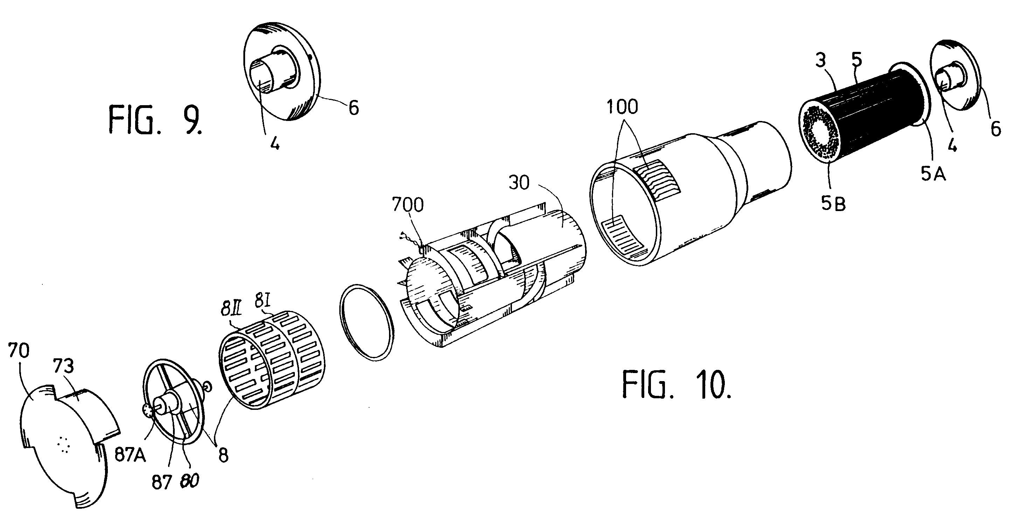

Fig. 9 illustrates in the perspective a right guiding means to be positioned at the right hand side of the heat exchanger according to Fig. 7, and
Fig. 10 illustrates in the perspective and in exploded view the heat recovering ventilator according to Fig. 2.

An embodiment according to the invention of a heat recovering ventilator is shown in the drawing, the illustrated embodiment provides features by means of which the individual advantages according to the invention present themselves.

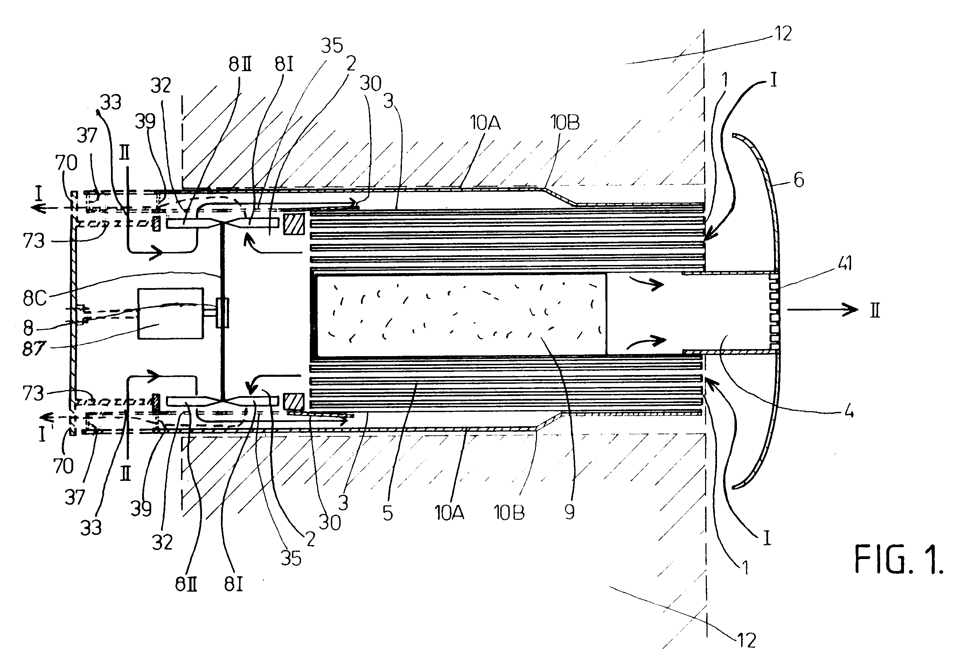

The, as only an example illustrated, embodiment of a heat recovering ventilator according to the invention is foreseen able to be installed within an opening in a wall 12 shown in Fig. 1. At the right hand side of the wall may for instance be found a heated room, while at the left hand side of the wall 12 the heat recovering ventilator protrudes out into the space with free air. The ventilator sucks used air from the heated room and away from it as a first flowing medium I being expelled into the free air space, while oppositely, fresh and colder air II as a second flowing medium II by means of the ventilator is suck into the room substituting the expelled air I. The heat recovering ventilator according to the invention simultaneously provides a heat transfer between the flowing media I and II so that heat from the heated flowing medium I is transferred to the flowing medium II, i.e. that energy saving the fresh air which is sucked or blown into the room is heated by heat supplied by the flowing medium being expelled.

To achieve a suitable separation between two flowing media suitable inwards-sucking and outwards-expelling flowconditions are arranged at both ends of the heat recovering ventilator so that a mixing of the flowing media is avoided in the close vicinity of the ventilator. At the one end in the heated room such a guiding means 6 is for instance positioned that the flowing medium II is sucked-in fresh air which arrives via the central range, while used air, i.e. air to be expelled, from the heated room is sucked out at the peripheral range of the ventilator as flowing medium I. Reversed, fresh air via the peripheral range of the ventilator is sucked-in at the fresh-space-end of the ventilator as the flowing medium II, while the used air, i.e. air to be expelled, from the heated room is going to leave the ventilator at the free-space-end of the ventilator, i.e. at the central range of the ventilator, as the flowing medium I.

At the free-space-end the ventilator comprises a rotary damper means 70 which as adapted to be able to be mounted on a shaft 87A positioned on a separate drive motor 87. The damper means 70 is able to be rotated in both directions within an angle of for instance 90 degrees, herethrough providing two damper means positions, one in which protruding vane portions on the damper means 70 and cylindric vanes 73 close the peripheral expelling passage through an opening 35 for the flowing medium II and close the entrance of the flowing medium I through openings 32 and 33, else they are open.

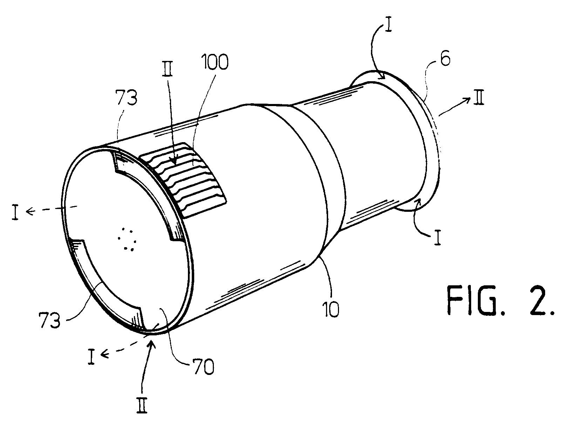

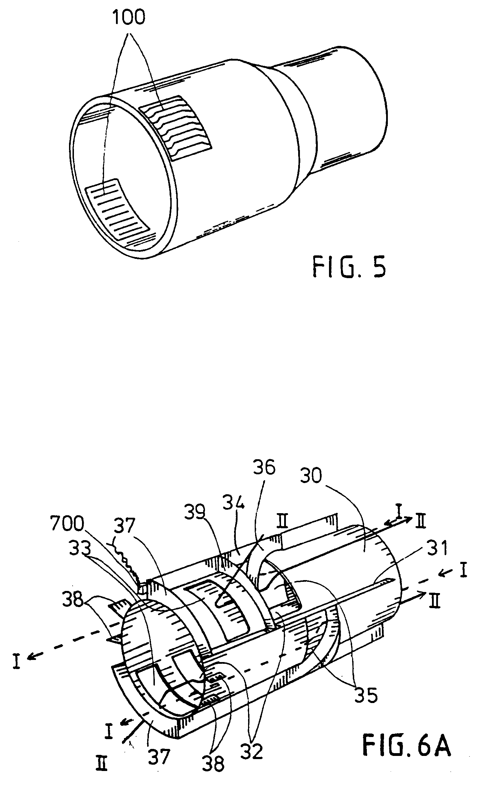

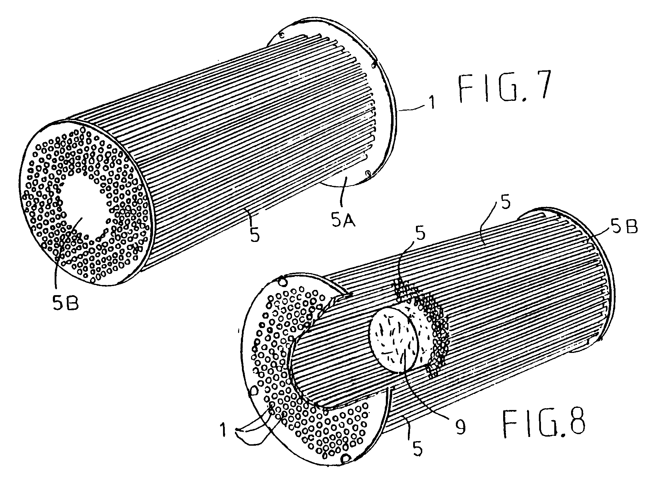

Flowing medium I is sucked-in at 1 from the heated room and via tubes 5 in the heat exchanger in which the tubes 5 are arranged substantially mutually in parallel and being mutually equally spaced with the flowing medium II to be described as follows located in the spacing. At the other end of the tubes 5 which in Fig. 1, Fig. 2, and Fig. 7 is shown at the left hand end and in Fig. 8 as the right hand end the flowing medium I flows furtheron via the exit 2 from the heat exchanger into the central range of the illustrated rotor 8I and furtheron through this rotor 8I through openings 35 which are shown in Fig. 6A and passing spacing providing means 38 and passing furtheron to the left according to Fig. 1 and Fig 2 out into the free-air-space. In one of the positions for the rotary damper means 70 the protruding vanes of the damper means are able to close the pathway between the openings 35 and the free-air-space. In this manner unnecessary draught through the ventilator is avoided when the ventilator halts.

The damper means is rotated by means of a drive motor 87 as mentioned above. An end stop means 700 is arranged on the means illustrated in Fig. 6A and serves to achieve a to and fro control of the movements of the damper means, to this purpose the means 700 for instance may be a suitable electric switch means.

To provide an understanding of the flow ways of the flowing media I and II through the heat recovering ventilator a reference may be made to Fig. 1 and Fig. 6A of the drawing. A longitudinal section through the ventilator is illustrated in Fig. 1 which longitudinal section according to Fig. 1 is passing through a means which is the cylindric means shown in Fig. 6A as the portion Q-Q of the section according to Fig. 1, i.e. on the illustrated side of guiding means portion 34 shown in Fig. 6A. Flows which are passing through ranges laying outside the illustrated section are shown in Fig. 1 in dotted lines at top and bottom of the cylindric means even though these flows pass outside these ranges. The same applies correspondingly for guiding means which are running higher and lower which guiding are shown in more dotted dotted lines, such means are those as the guiding means 37 and 39 being crosswise arranged in relation to the longitudinal flow of the flowing medium I. In Fig. 6A the factual flow ways for the flowing media I and II are shown by means of corresponding lines, i.e. in dotted line for the flowing medium I and by means of a full line for the flowing medium II.

It is thus to be understood that the flow path for the flowing medium II runs radially inwards directed through for instance two in Fig. 5 illustrated plates 100 with gill slots and through openings 33 shown in Fig. 6A and furtheron into the central range of the rotor 8II belonging to the ventilator 8 and from there driven outwards through the peripheral portion of this ventilator rotor through openings 32 and between guiding means 31 and 34 and through the peripheral around the heat exchanger and in oblique direction downwards along external sides of the tubes 5 and inbetween these to the mid-range of the heat exchanger and outwards towards and into the heated room through a filter 41 from the tube 4.

The vanes 73 of the damper means close, when they are rotated to occupy the closed position of the damper means, the said flow path passing through the openings 33 at the internal sides of these openings.

It is to be understood that it is possible to connect further lengths of tubes for the flowing medium II to the mushroom shaped guiding means body 6 and for instance guide the flowing medium II as fresh air from the free spece to any more definite place or spot where work is carried out in the heated room or to any other kind of distributing system, etc.

Within the heat exchanger a heat exchange between the flowing media I and II takes place when the tubes 5 are made of a suitable heat conducting material, whereby the warmer flowing medium supplies heat to the colder flowing medium. Per se a heat exchange may take place mutually in both directions between the flowing media. In the present case it is foreseen that the flowing medium I is the warmest of the two flowing media.

In practice experiments have shown that the substantial portion of heat being present in the used air which is being expelled through the ventilator can be recovered and can reenter into the living room by means of a ventilator being embodied as described herethrough, and this takes place without the generation of inconvenient draught according to the experiments carried out in practice.

At an embodiment of a heat recovering ventilator according hereto it has shown itself effective when the tubes 5 consist of thin tubes made of plastic. Herethrough, also the weight of the ventilator becomes low. An internal diameter of the tubes of a few millimetres suffices.

When the rotor of the ventilator is made of electric conducting material it is easily understood that the inwards flowing medium II is going to have the same static potential as the flowing medium I being led away. Herethrough, it is attained that the in-door climate after longer time of operation of the heat recovering ventilator is not influenced in an adverse manner static electrically by the running ventilator.

Of the shown embodiment of the ventilator it is also easily understood that for instance the filter 41 and the heat exchanger with the tubes 5 each of them may be shaped as units able to be pulled out. In this respect it may be advantageous if the heat exchanger is somewhat conically shaped having the smallest diameter hereof positioned closest to the ventilator 8 whereby it rather easy may be pulled out for possible cleaning in case the passing air after a time of operation pollutes these portions which are the portions most apt to become dirty with time. The remaining portion of the ventilator may also be shaped permitting a pulling-out of the units. The units may be kept in place by means of small permanent magnets being positioned suitably according to the purpose. Such permanent magnets which are not illustrated may besides between the filter 41 and the tube 4 be located between the heat exchanger unit and the element shown in Fig. 6A, and also between this and the cover element shown in Fig. 5 respectively towards the ventilator unit. To avoid unauthorized disassembling of the ventilator such permanent magnets may be furthermore supplemented by, wholly or in part, further joining means or elements, such as screws, nuts, clamps, etc.

The embodiment which is described and illustrated has in practice shown itself to be able to operate rather noiseless.

## Claims

1. Ventilator with a heat exchanger for heat recovery through which two flowing, preferably gaseous, media pass in opposite directions, whereby:
- said ventilator (8) is of the radial type and is positioned at one of the end portions (5b) of the heat exchanger;
- said end portion (5b) of the heat exchanger comprises an outlet for the first flowing medium and an inlet for the second flowing medium which are meighbouring and coaxially arranged;
- said ventilator comprises a double rotor consisting of two rotor sections (8I,8II) separated by a partition wall (8c);
- each of said rotor sections (8I,8II) separately drives one of the two flowing media;
- the axis of rotation of the rotor sections (8I,8II) is substantially oriented in the longitudinal direction of the heat exchanger;
**characterized** in that
- said rotor sections (8I,8II) of the double rotor are arranged adjacently and longitudinally in line on a common shaft and are enclosed by a cylindrical shaped means (30) whose axis is also oriented in the longitudinal direction of the heat exchanger;
- the length of the cylindrical shaped means (30) is adapted to allow it to be joined to the heat exchanger by a suitable tight fit whilst also accommodating the double rotor;
- the wall of said cylindrical shaped means (30) is provided with apertures (35,32) which are arranged to register with the rotor sections (8I,8II) such that the media flows may pass therethrough when driven by a rotor;
- partitionlike guiding means for guiding as well as separating the two media flows (31,38) are provided between the apertures (35,32) of the cylindrical shaped means (30) and the outermost of the media inlet and outlet; and that said partitionlike guiding means extend outwards towards a surrounding body (10).

2. A ventilator according to claim 1, **characteristic in** that the central portion of the heat exchanger (5) obstructs the passage of the media flows (I,II).

3. A ventilator according to claim 1 or 2, **characteristic in** that the partition wall (8c) is heat conducting.

4. A ventilator according to claim 1, 2, or 3, **characteristic in** that that part of the cylindrical shaped means (30) which is disposed on the far side of the rotor (8I, 8II) with respect to the heat exchanger (5) comprises apertures (33) for allowing radial flow of the medium (II) which passes the rotor part (8II) farthest from the heat exchanger (5).

5. A ventilator according to claim 4, **characteristic in** that apertures (100) in the surrounding body (10) register with the apertures (33) in the cylindrical shaped means (30) for further canalizing the medium flowing through the aperture (33).

6. A ventilator according to any of the above claims, **characteristic in** that per se known damper means (70; 73) are arranged for opening passages at the partitionlike guiding means (38) and the apertures (33, 100), at least during operation of the ventilator.

7. A ventilator according to any of the above claims, **characteristic in** that the body or cylindrical cover means (10) surrounding the ventilator has a reduced diameter at a location (10B) where the heat exchanger (5) is enclosed.

8. A ventilator according to any of the above claims, **characteristic in** that additional crosswise oriented guiding means (36, 39, 37) are disposed between the cylindrical shaped means (30) and the surrounding body (10) in conjunction with the essentially longitudinally oriented partitionlike guiding means (31, 38).

## Patentansprüche

1. Ventilator mit einem Wärmeaustauscher zur Wärmerückgewinnung, durch den zwei strömende, vorzugsweise gasförmige Medien in entgegengesetzten Richtungen hindurchtreten, wobei:
- der Ventilator (8) in Radialbauart ausgeführt und an einem der Endabschnitte (5B) des Wärmeaustauschers positioniert ist;
- der Endabschnitt (5B) des Wärmeaustauschers einen Auslaß für das erste strömende Medium und einen Einlaß für das zweite strömende Medium, die benachbart und koaxial angeordnet sind, umfaßt;
- der Ventilator einen doppelten Rotor umfaßt, der aus zwei Rotorabschnitten (8I,8II), die durch eine Trennwand (8C) voneinander getrennt sind, besteht;
- jeder der Rotorabschnitte (8I,8II) separat eines der beiden strömenden Medien treibt;
- die Rotationsachse der Rotorabschnitte (8I,8II) im wesentlichen in Längsrichtung des Wärmeaustauschers angeordnet ist;
**dadurch gekennzeichnet,** daß
- die Rotorabschnitte (8I,8II) des Doppelrotors benachbart und in Längsrichtung eine Linie bildend auf einer gemeinsamen Welle angeordnet und von einem zylindrisch geformten Mittel (30), dessen Achse ebenfalls in Längsrichtung des Wärmeaustauschers orientiert ist, umschlossen sind;
- die Länge des zylindrisch geformten Mittels (30) so gewählt ist, daß es mit dem Wärmeaustauscher durch einen geeigneten festen Sitz verbunden werden kann, während es außerdem den Doppelrotor aufnimmt;
- die Wand des zylindrisch geformten Mittels (30) mit Öffnungen (35,32) versehen ist, die so angeordnet sind, daß sie so zu den Rotorabschnitten (8I,8II) passen, daß die Medienströme dort, wenn von einem Rotor getrieben, hindurchfließen können;
- teilungsartige Führungsmittel sowohl zur Führung als auch zur Trennung der zwei Medienströme (31,38) zwischen den Öffnungen (35,32) des zylindrisch geformten Mittels (30) und dem am weitesten außen liegenden Medienein- und -auslaß vorgesehen sind; und daß sich diese teilungsartigen Führungsmittel nach außen auf einen umgebenden Körper (10) hin erstrecken.

2. Ein Ventilator nach Anspruch 1, **dadurch gekennzeichnet,** daß der mittlere Abschnitt des Wärmeaustauschers (5) den Durchfluß der Medienströme (I,II) sperrt.

3. Ein Ventilator nach Anspruch 1 oder 2, **dadurch gekennzeichnet,** daß die Trennwand (8C) wärmeleitend ist.

4. Ein Ventilator nach Anspruch 1, 2 oder 3, **dadurch gekennzeichnet,** daß der Teil des zylindrisch geformten Mittels (30), der auf der in bezug auf den Wärmeaustauscher (5) entfernten Seite des Rotors (8I,8II) angebracht ist, Öffnungen (33) für eine Radialströmung des Mediums (II) umfaßt, das das vom Wärmeaustauscher am weitesten entfernte Rotorteil (8II) passiert.

5. Ein Ventilator nach Anspruch 4, **dadurch gekennzeichnet,** daß Öffnungen (100) in dem umgebenden Körper (10) mit den Öffnungen (33) in dem zylindrisch geformten Mittel (30) passen, um das durch die Öffnung (33) strömende Medium weiter zu kanalisieren.

6. Ein Ventilator nach einem der vorangehenden Ansprüche, **dadurch gekennzeichnet,** daß für sich bekannte Dämpfungsmittel (70; 73), zumindest während des Ventilatorbetriebes, zur Öffnung von Durchtritten an den teilungsartigen Führungsmitteln (38) und den Öffnungen (33, 100) vorgesehen sind.

7. Ein Ventilator nach einem der vorangehenden Ansprüche, **dadurch gekennzeichnet,** daß der Körper oder das zylindrische Ummantelungsmittel (10), das den Ventilator umgibt, einen reduzierten Durchmesser an einer Stelle (10B) aufweist, an der der Wärmeaustauscher (5) umschlossen ist.

8. Ein Ventilator nach einem der vorangehenden Ansprüche, **dadurch gekennzeichnet,** daß zusätzliche quer ausgerichtete Führungsmittel (36, 39, 37) zwischen dem zylindrisch geformten Mittel (30) und dem umgebenden Körper (10) in Verbindung mit im wesentlichen längs gerichteten teilungsartigen Führungsmitteln (31, 38) angebracht sind.

## Revendications

1. Ventilateur comportant un échangeur de chaleur pour récupérer de la chaleur, à travers lequel deux fluides s'écoulant, de préférence gazeux, passent dans des sens opposés :
- ledit ventilateur (8) étant du type radial et étant positionné à une des parties d'extrémité (5b) de l'échangeur de chaleur ;
- ladite partie d'extrémité (5b) de l'échangeur de chaleur comprenant une sortie pour le premier fluide s'écoulant et une entrée pour le second fluide s'écoulant, qui sont voisines et agencées coaxialement ;
- ledit ventilateur comprenant un rotor double constitué de deux sections de rotor (8I,8II) séparées par une paroi de séparation (8c) ;
- chacune desdites sections du rotor (8I,8II) entraînant séparément un des deux fluides s'écoulant ;
- l'axe de rotation des sections du rotor (8I,8II) étant sensiblement orienté dans la direction longitudinale de l'échangeur de chaleur ;
caractérisé en ce que :
- lesdites sections de rotor (8I,8II) du rotor double sont agencées de façon adjacente et longitudinalement en ligne sur un arbre commun et sont enfermées par des moyens (30) de forme cylindrique, dont l'axe est également orienté dans la direction longitudinale de l'échangeur de chaleur ;
- la longueur des moyens (30) de forme cylindrique est adaptée pour leur permettre d'être joints à l'échangeur de chaleur par un raccord étanche approprié tout en recevant également le rotor double ;
- la paroi desdits moyens (30) de forme cylindrique est munie d'ouvertures (35,32) qui sont agencées pour correspondre aux sections de rotor (8I,8II) de sorte les flux de fluide peuvent les traverser quand ils sont entraînés par un rotor ;
- des moyens de guidage en forme de séparation pour guider et séparer les deux flux de fluide (31,38) sont prévus entre les ouvertures (35,32) des moyens (30) de forme cylindrique et la plus externe de l'entrée et de la sortie de fluide ; et en ce que lesdits moyens de guidage en forme de séparation s'étendent vers l'extérieur vers un corps environnant (10).

2. Ventilateur selon la revendication 1,
caractérisé en ce que la partie centrale de l'échangeur de chaleur (5) obstrue le passage des flux de fluide (I,II).

3. Ventilateur selon la revendication 1 ou 2,
caractérisé en ce que la paroi de séparation (8c) conduit la chaleur.

4. Ventilateur selon la revendication 1, 2 ou 3,
caractérisé en ce que la partie des moyens (30) de forme cylindrique, qui est disposée sur le côté éloigné du rotor (8I,8II) par rapport à l'échangeur de chaleur (5) comprend des ouvertures (33) pour permettre l'écoulement radial du fluide (I,II) qui passe la partie du rotor (8II) au plus loin de l'échangeur de chaleur (5).

5. Ventilateur selon la revendication 4,
caractérisé en ce que des ouvertures (100) dans le corps environnant (10) correspondant aux ouvertures (33) dans les moyens (30) de forme cylindrique pour encore canaliser l'écoulement de fluide à travers les ouvertures (33).

6. Ventilateur selon l'une quelconque des revendications ci-dessus,
caractérisé en ce que des moyens d'amortissement connus en soi (70;73) sont agencés pour ouvrir des passages au niveau des moyens de guidage (38) en forme de séparation et des ouvertures (33,100), au moins pendant le fonctionnement du ventilateur.

7. Ventilateur selon l'une quelconque des revendications ci-dessus,
caractérisé en ce que le corps ou les moyens de recouvrement cylindriques (10) entourant le ventilateur présentent un diamètre réduit à un endroit (10B) où l'échangeur de chaleur (5) est enfermé.

8. Ventilateur selon l'une quelconque des revendications ci-dessus,
caractérisé en ce que des moyens de guidage supplémentaires (36,39,37) orientés en travers sont disposés entre les moyens (30) de forme cylindrique et le corps environnant (10) en conjonction avec les moyens de guidage (31,38) en forme de séparation orientés essentiellement longitudinalement.
